# EUROPÄISCHE PATENTSCHRIFT

(11) **EP 2 801 718 B1**
(45) Veröffentlichungstag und Bekanntmachung des Hinweises auf die Patenterteilung: **29.03.2017**
(21) Anmeldenummer: 14166411.0
(22) Anmeldetag: 29.04.2014
(51) Int. Cl.: F02M 37/00, F02M 55/00, F16L 41/02, F16L 47/32

(54) **Fluidstecker**
Fluid plug
Raccord pour fluide

(30) Priorität: 06.05.2013 DE 102013104597
(43) Veröffentlichungstag der Anmeldung: 12.11.2014
(73) Patentinhaber: VERITAS AG, 63571 Gelnhausen (DE)
(72) Erfinder: Scheicher, Steffen, 63599 Biebergemünd (DE); Thomson, Stuart, 63571 Gelnhausen (DE)
(74) Vertreter: Patentship Patentanwaltsgesellschaft mbH

(56) Entgegenhaltungen:
- EP-A1- 1 154 150
- DE-A1-102010 016 262
- DE-A1-102010 026 100
- DE-B3-102004 059 343
- DE-U1- 20 319 558
- DE-U1-202008 013 641
- FR-A- 347 944
- FR-A1- 2 930 621
- US-A- 3 791 679
- US-A1- 2005 133 509

## Beschreibung

Die vorliegende Erfindung betrifft einen Fluidstecker für ein Kraftstoffsystem.

Die Druckschrift DE 20 2010 026 100 A1 beschreibt eine Schnellkupplung für Fluidleitungen mit einem Stecker mit einem Stutzen und wenigstens einer quer vom Stutzen abragenden Anschlussleitung.

Die Druckschrift FR 2 930 621 betrifft eine Anschlussvorrichtung für eine Fluidleitung, insbesondere für eine Kraftstoffeinspritzleitung.

Die Druckschrift DE 203 19 558 U1 betrifft einen steckbaren und verrastbaren Leitungsverbinder mit einem Verbinderstück zum Anschluss einer Kraftstoffleitung an ein Verbindergegenstück.

Die Druckschrift DE 10 2010 016 262 A offenbart den Oberbegriff von Anspruch 1 und betrifft einen Verbinder, der als ein Verbindungsabschnitt eines Fluidrohrs angepasst ist.

Die Druckschrift DE 10 2004 059 343 B3 betrifft eine Vorrichtung zum Befestigen einer Kraftstoffrücklaufleitung an einer Kraftstoffeinspritzdüse mit einem, die Kraftstoffeinspritzdüse teilweise umgreifenden, im Wesentlichen C-förmigen, zwei Haltearme aufweisenden Grundkörper.

Die Druckschrift EP 1 154 150 A1 betrifft einen rastbaren Leitungsverbinder zum Anschluss einer Druck- und/oder Strömungsmittelleitung. Der Leitungsverbinder besteht aus einem Steckerteil mit einem Steckerschaft und mindestens einem Leitungsabgang. Der Steckerschaft weist einen inneren Durchgangskanal auf.

Es ist die der Erfindung zugrundeliegende Aufgabe, einen Fluidstecker anzugeben, bei dem die Stabilität eines Stutzens zum Anschließen einer Kraftstoffleitung verbessert ist.

Diese Aufgabe wird durch den Gegenstand mit den Merkmalen nach dem unabhängigen Anspruch 1 gelöst. Vorteilhafte Ausführungsformen der Erfindung sind Gegenstand der abhängigen Ansprüche.

Gemäß einem Aspekt der Erfindung wird die Aufgabe durch einen Fluidstecker für ein Kraftstoffsystem mit dem Merkmalen von Anspruch 1 gelöst.

Der Verstärkungsrahmen umfasst beispielsweise eine zu dem ersten Stutzen parallele Wand, die zu dem ersten Stutzen beabstandet ist und um den ersten Stutzen umläuft. Der erste Stutzen ragt beispielsweise aus dem Inneren des Verstärkungsrahmens heraus. An der Oberseite weist der Verstärkungsrahmen beispielsweise eine Öffnung auf, auf die das Deckelement aufsetzbar ist. Durch den Verstärkungsrahmen wird der technische Vorteil erreicht, dass eine Verbindungsstelle zwischen dem ersten Stutzen und dem zweiten Stutzen, beziehungsweise zwischen dem ersten Stutzen und dem dritten Stutzen, mechanisch entlastet wird und ein Bruch der Verbindungsstelle verhindert wird.

Durch den Verstärkungsrahmen wird beispielsweise der technische Vorteil erreicht, dass eine Robustheit des Fluidsteckers erhöht wird und ein Abknicken oder Brechen des Stutzens zum Anschließen einer Kraftstoffleitung verhindert wird. Selbst
bei Fehlbedienung kann sowohl bei der Montage als auch der Demontage eine Beschädigung/Vorschädigung des Fluidsteckers verringert werden. Die deutlich gesteigerte Robustheit des Fluidsteckers senkt das Risiko von Feldausfällen.

In einer vorteilhaften Ausführungsform des Fluidsteckers durchdringt der zweite Stutzen den Verstärkungsrahmen senkrecht. Dadurch wird beispielsweise der technische Vorteil erreicht, dass sich die Stabilität der Fluidsensorkonstruktion weiter verbessert.

In einer weiteren vorteilhaften Ausführungsform des Fluidsteckers ist der erste Stutzen in einem rechten Winkel zum zweiten Stutzen angeordnet. Dadurch wird beispielsweise der technische Vorteil erreicht, dass der zweite Stutzen nach Aufstecken des Fluidsteckers parallel zu einer Oberfläche verläuft.

Gemäß der Erfindung umfasst der Fluidstecker einen dritten Stutzen zum Anschließen einer Kraftstoffleitung. Dadurch wird beispielsweise der technische Vorteil erreicht, dass der Stecker zum Verbinden von zwei Einspritzdüsen verwendet werden kann.

Gemäß der Erfindung stützt der Verstärkungsrahmen den dritten Stutzen gegenüber dem ersten Stutzen ab. Dadurch wird beispielsweise der technische Vorteil erreicht, dass ein Abknicken beider Stutzen verhindert wird und sich die Stabilität des Fluidsteckers noch weiter verbessert.

In einer weiteren vorteilhaften Ausführungsform des Fluidsteckers ist der Verstärkungsrahmen im Querschnitt fünfeckig. Dadurch wird beispielsweise der technische Vorteil erreicht, dass eine hohe Stabilität bei einer abgewinkelten Anordnung der Stutzen erreicht wird.

In einer weiteren vorteilhaften Ausführungsform des Fluidsteckers weist der Verstärkungsrahmen zwei parallele Seitenwände auf. Dadurch wird beispielsweise der technische Vorteil erreicht, dass sich die Festigkeit des Verstärkungsrahmens verbessert.

In einer weiteren vorteilhaften Ausführungsform des Fluidsteckers umfasst der Verstärkungsrahmen eine Ausnehmung für ein seitlich herausragendes Klemmelement. Dadurch wird beispielsweise der technische Vorteil erreicht, dass ein Klemmelement als Sicherung für den Fluidstecker trotz des Verstärkungsrahmens seitlich betätigt werden kann. In einer weiteren vorteilhaften Ausführungsform des Fluidsteckers umfasst der Verstärkungsrahmen einen Verstärkungsabschnitt zum Verstärken einer Übergangsstelle zwischen dem Verstärkungsrahmen und dem zweiten Stutzen und/oder dem dritten Stutzen.

Dadurch wird beispielsweise der technische Vorteil erreicht, dass eine Beschädigung der Stutzen zum Aufstecken einer Kraftstoffleitung noch besser verhindert wird.

In einer weiteren Ausführungsform des Fluidsteckers weist der Verstärkungsrahmen eine zylindrische Form auf. Dadurch wird beispielsweise der technische Vorteil erreicht, dass sich der Aufbau des Fluidsteckers vereinfacht und die zylindrische Form eine hohe Festigkeit aufweist.

Gemäß der Erfindung umfasst der Fluidstecker ein Deckelelement zum zumindest teilweisen Übergreifen eines Randes des Verstärkungsrahmens. Dadurch wird beispielsweise der technische Vorteil erreicht, dass die Festigkeit des Fluidsteckers nach dem Aufsetzen des Deckelelementes nochmals erhöht ist.

Gemäß der Erfindung umfasst das Deckelelement einen Führungsabschnitt zum Führen des Deckelelementes gegenüber der Innenseite des Verstärkungsrahmens. Dadurch wird beispielsweise der technische Vorteil erreicht, dass das Deckelement in einfacher Weise aufgesetzt werden kann und ein Verklemmen verhindert wird, beispielsweise in einem Automatisationsprozess.

Gemäß der Erfindung umfasst das Deckelelement ein Rastelement zum Einrasten auf der Außenseite des Verstärkungsrahmens. Dadurch wird beispielsweise der technische Vorteil erreicht, dass das Deckelement auf einfache Weise fixiert werden kann.

In einer weiteren vorteilhaften Ausführungsform des Fluidsteckers ist das Rastelement des Deckelelementes gegenüberliegend zu einem Führungsabschnitt des Deckelelementes angeordnet. Dadurch wird beispielsweise ebenfalls der technische Vorteil erreicht, dass sich die Festigkeit und Robustheit nochmals verbessert.

In einer weiteren vorteilhaften Ausführungsform des Fluidsteckers umfasst der Fluidstecker ein Klemmelement zum Sichern des Fluidsteckers auf der Einspritzdüse, das eine Führungskante zum Führen des Klemmelementes an der Innenseite des Verstärkungsrahmens umfasst. Dadurch wird beispielsweise der technische Vorteil erreicht, dass ein Einsetzen des Klemmelementes vereinfacht wird.

Ausführungsbeispiele der Erfindung sind in den Zeichnungen dargestellt und werden im Folgenden näher beschrieben.

Es zeigen:
Fig. 1 eine perspektivische Ansicht eines Fluidsteckers;
Fig. 2 eine Querschnittsansicht durch den Fluidstecker;
Fig. 3 eine Explosionsansicht des Fluidsteckers;
Fig. 4 eine Ansicht eines Basisteils des Fluidsteckers;
Fig. 5 eine Querschnittsansicht durch das Basisteil;
Fig. 6 eine perspektivische Ansicht eines Deckelelements;
Fig. 7 eine perspektivische Ansicht eines Klemmelementes; und
Fig. 8 eine Aufsicht auf eine weitere Ausführungsform eines Fluidsteckers, nicht Bestandteil der Erfindung.

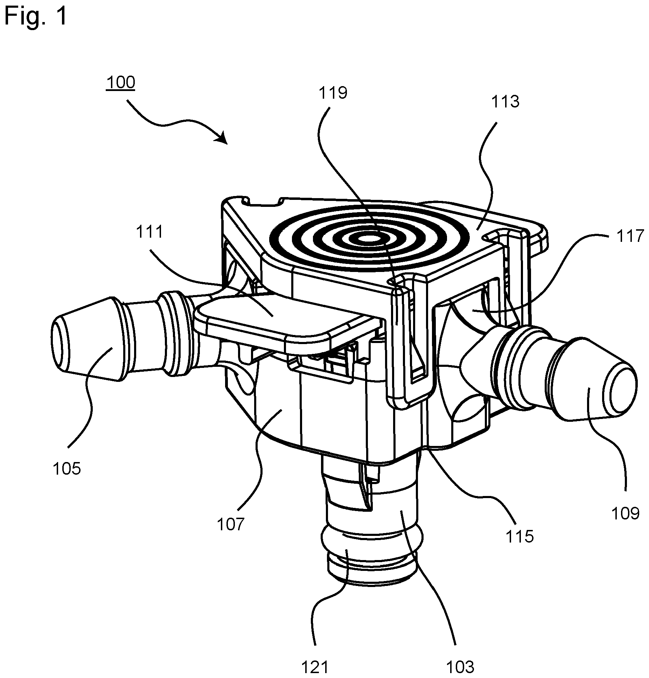

Fig. 1 zeigt eine perspektivische Ansicht eines Fluidsteckers 100. Der Fluidstecker 100 dient als Schnellkupplung für Fluidleitungen in einem Kraftstoffsystem eines Verbrennungsmotors, wie beispielsweise als Leckölstecker einem Common Rail System. Das Kraftstoffsystem verwendet beispielsweise eine Hochdruckpumpe, die den Kraftstoff auf ein hohes Druckniveau bringt. Der unter Druck stehende Kraftstoff füllt ein Rohrleitungssystem, das bei Motorbetrieb ständig unter Druck steht. Der Fluidstecker 100 stellt in diesem Kraftstoffsystem eine druckbeständige Verbindung zwischen einer Einspritzdüse und einer Kraftstoffleitung her. Einzelne Stutzen des Fluidsteckers 100 dienen als Anschlussstellen und Ansatzrohrstücke für die unterschiedlichen Komponenten des Kraftstoffsystems.

Der Fluidstecker 100 wird von oben mittels eines Stutzens 103 auf die Einspritzdüse des Kraftstoffsystems aufgesetzt und dann mechanisch gegen ein Abziehen gesichert. Zum Abdichten der hierbei entstehenden Verbindungsstelle weist der Stutzen 103 einen Dichtring 121 auf, der im unteren Bereich um den Stutzen 103 herumläuft.

Der Fluidstecker 100 umfasst ein einstückiges Basiselement 115, das den Stutzen 103 und zwei Stutzen 105 und 109 zum Anschließen einer Kraftstoffleitung bildet. Die Stutzen 105 und 109 sind senkrecht zu dem Stutzen 103 angeordnet, der den Anschluss zum Aufstecken auf eine Einspritzdüse des Kraftstoffsystems bildet. Im Inneren sind die Stutzen 103, 105 und 109 derart verbunden, dass ein durchgehender Kraftstoffkanal entsteht, durch den der Kraftstoff zwischen den Stutzen fließen kann.

Das Basiselement 115 umfasst einen umlaufenden Verstärkungsrahmen 107, der in einem Abstand um den Stutzen 103 umläuft und durch den die Stutzen 105 und 109 hindurchragen. Der Verstärkungsrahmen 107 bildet ein Gerüst zum Abstützen der Stutzen 105 und 109 und ist im Inneren mechanisch mit dem Stutzen 103 verbunden. Dadurch kann eine seitlich wirkende Kraft auf einen der beiden Stutzen 105 oder 109 auf den zentralen Stutzen 103 übertragen werden.

Dadurch entlastet der Verstärkungsrahmen 107 die Verbindungsstelle der Stutzen 105 und 109 an dem Stutzen 103. Der Verstärkungsrahmen 107 umschließt den eigentlichen Fluidstecker 100 wie ein Korsett und verstärkt die Gesamtkonstruktion des Fluidsteckers 100. Durch den Verstärkungsrahmen 107 ist die Restlänge der Stutzen und somit der Hebelarm kürzer. Auch insgesamt ergibt sich ein robusterer Aufbau des Fluidsteckers 100 mit geschlossenem Aufbau, durch den bei Reparaturarbeiten eine Beschädigung des Fluidsteckers 100 verhindert wird.

Die Verbindungstelle der Stutzen 105 und 109 mit dem Verbindungsrahmen 107 ist nochmals mittels eines Verstärkungsabschnittes 117 verstärkt. Der Verstärkungsabschnitt 117 läuft an der Verbindungsstelle der Stutzen mit dem Verstärkungsrahmen 107 um die jeweiligen Stutzen 105 und 109 um und sichert die Stutzen nochmals gegenüber seitlich wirkenden Kräften.

Zum Sichern des aufgesetzten Fluidsteckers 100 gegen ein unbeabsichtigtes Lösen ist ein Klemmelement 111 vorgesehen, das in Richtung der Einspritzdüse verschoben werden kann und dabei an dem Stutzen 103 angeordnete Federarme blockiert. Zum Betätigen und Verschieben des Klemmelementes 111 ragt dieses seitlich aus dem Verstärkungsrahmen 107 heraus.

Weiter umfasst der Fluidstecker 100 ein Deckelelement 113, das von oben auf den Verstärkungsrahmen 107 aufgesetzt wird und das dessen Verwindungssteifigkeit nochmals verbessert. Das Deckelelement 113 übergreift einen Rand des Verstärkungsrahmens 107 rahmenmäßig von einer Außenseite her und stützt den Verstärkungsrahmen 107 hierdurch ab. Das Deckelelement 113 übergreift den Verstärkungsrahmen 107 zum Teil in aufsitzender Weise.

Durch das Aufsetzen des Deckelelementes 113 wird die Scherung des Verstärkungsrahmens 107 verhindert. Zur Befestigung auf dem Verstärkungsrahmen 107 sind an der Außenseite des Deckelelementes 113 Rastelemente 119 vorgesehen, die beim Aufsetzen des Deckelementes 113 über entsprechend angeordnete Rastnasen auf dem Verstärkungsrahmen 107 gleiten. Dadurch kann das Deckelelement 113 auf dem Verstärkungsrahmen 107 verrastet werden.

Das Basiselement 115, das Klemmelement 111 und das Deckelelement 113 können einstückige Spritzgussformteile sein, die aus einem thermoplastischen Kunststoff hergestellt worden sind. Ein derartiger Kunststoff ist beispielsweise Polyamid (PA), Polyphthalamid (PPA), Polyphenylensulfid (PPS). Alle genannten Kunststoffe können mit Glasfasern oder Glaskugeln verstärkt sein.

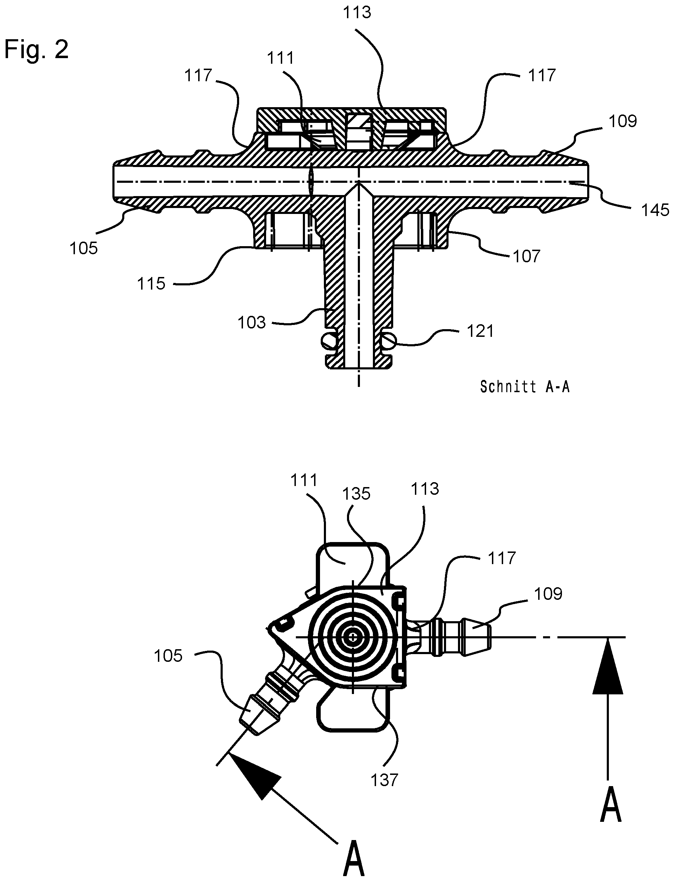

Fig. 2 zeigt eine abgewinkelte Querschnittsansicht durch den Fluidstecker 100 entlang der gestrichelt gezeigten Linie A-A. Durch die Verstärkungsabschnitte 117 wird ein kontinuierlicher, konkaver Übergang zwischen den Stutzen 105 und 109 und dem Verstärkungsrahmen 107 erreicht. Die Wandstärke des Stutzens 105 und 109 nimmt im Verstärkungsabschnitt 117 an der Übergangsstelle zum Verbindungsrahmen 107 kontinuierlich zu und geht in den Verbindungsrahmen 107 über, so dass ein kontinuierlicher kantenloser Übergangsbereich entsteht. Der Verstärkungsrahmen 107 des Basiselements 115 umläuft die Verbindungstelle, an der die Stutzen 105 und 109 mit dem zentralen Stutzen 103 verbunden sind.

Das Deckelelement 113 deckt die Öffnung des Verstärkungsrahmens 107 nach oben hin ab und ist auf dem Verstärkungsrahmen 107 verrastet. Die spezielle, selbsthemmende Deckelkonstruktion sichert den Zusammenhalt der Einzelteile, insbesondere bei der Demontage des Fluidsteckers 100 von einer Einspritzdüse (Injektor) und erhöht die Festigkeit des Fluidsteckers 100.

Der Verstärkungsrahmen 107 weist eine im Querschnitt fünfeckige Form mit zwei parallelen Seitenwänden 135 und 137 auf. Dadurch wird nicht nur der Vorteil erreicht, dass eine kompakte und stabile Bauform des Fluidsteckers 100 realisiert wird, sondern auch dass das verschiebbare Klemmelement 111 aus den parallel angeordneten Seitenwänden 135 und 137 herausragen kann und leicht betätigt werden kann. Zudem können die Stutzen 105 und 109 zueinander in einem stumpfen Winkel angeordnet sein. Der stumpfe Winkel zwischen den Stutzen 105 und 109 zum Anschließen des Kraftstoffschlauches ermöglicht, dass Überlängen des Kraftstoffschlauches zwischen zwei Einspritzdüsen in zwischen den einzelnen Fluidsteckern 100 entstehenden Schlauchbögen aufgenommen werden. Die Stutzen 105 und 109 weisen dazu vorzugsweise einen Winkel im Bereich zwischen 120° bis 150°auf, beispielsweise 130° oder 140°.

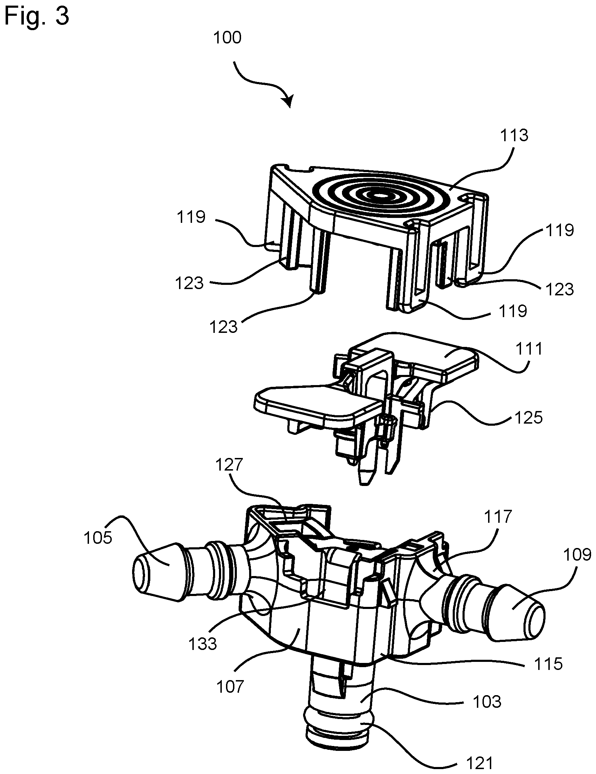

Fig. 3 zeigt eine Explosionsansicht des Fluidsteckers 100 mit dem Basisteil 115, dem Klemmelement 111 und dem Deckelelement 113. Das Basisteil 115 dient als Basis für das Klemmelement 111 und das Deckelelement 113. Beim Einstecken des Klemmelementes 111 auf das Basiselement 115 wird das Klemmelement 111 seitlich durch zwei Führungskanten 125 an der Innenseite des Verstärkungsrahmens 107 entlanggeführt. Dadurch wird auf einfache Weise eine korrekte Position und Lage des Klemmelementes 111 innerhalb des Fluidsteckers 100 sichergestellt und ein Automatisierungsprozess erleichtert.

In den Seitenwänden des Verstärkungsrahmens 107 sind die Aussparungen 133 gebildet. Die Aussparungen 133 ermöglichen ein Verschieben des Klemmelementes 111 entlang der Richtung des Stutzens 103. Durch ein Versschieben des Klemmelementes 111 wird eine mechanische Verriegelung des Fluidsteckers 100 in der Einspritzdüse verriegelt oder freigegeben. Durch die in den parallelen Seitenwänden 135 und 137 angeordneten Aussparungen 133 ragt das Klemmelement 111 seitlich aus dem Verstärkungsrahmen 107 heraus, so dass dieses von außen bedient werden kann.

Nach dem Einsetzen des Klemmelementes 111 in den Verstärkungsrahmen 107 wird das Deckelelement 113 auf das Basiselement 115 aufgesetzt. Um das Deckelelement 113 in die korrekte Lage zu bringen und bei einer Verschiebung zu führen, sind auf dem Deckelelement 113 senkrecht herausragende Führungsabschnitte 123 gebildet. Die Führungsabschnitte 123 ragen in das Innere des Verstärkungsrahmens 107 hinein. Die Führungsabschnitte 123 stützen und führen das Deckelement 113 beim Aufsetzen auf den Verstärkungsrahmen 107 ab. Dabei liegen die Führungsabschnitte 123 an der Innenwand des Verstärkungsrahmens 107 an. Nach dem Verrasten des Deckelelementes 113 stehen die Führungselemente 123 weiterhin mit der der Innenseite des Verstärkungsrahmens 107 in Kontakt. Hierdurch wird ein Aufsetzen des Deckelementes 111 bei einem Automatisierungsprozess erleichtert und die Stabilität des Fluidsteckers 100 zusätzlich verbessert. Zur Verstärkung der Stutzen 105 und 109 sind im Inneren des Verstärkungsrahmens 107 auf den Stutzen Verstärkungsrippen 127 gebildet.

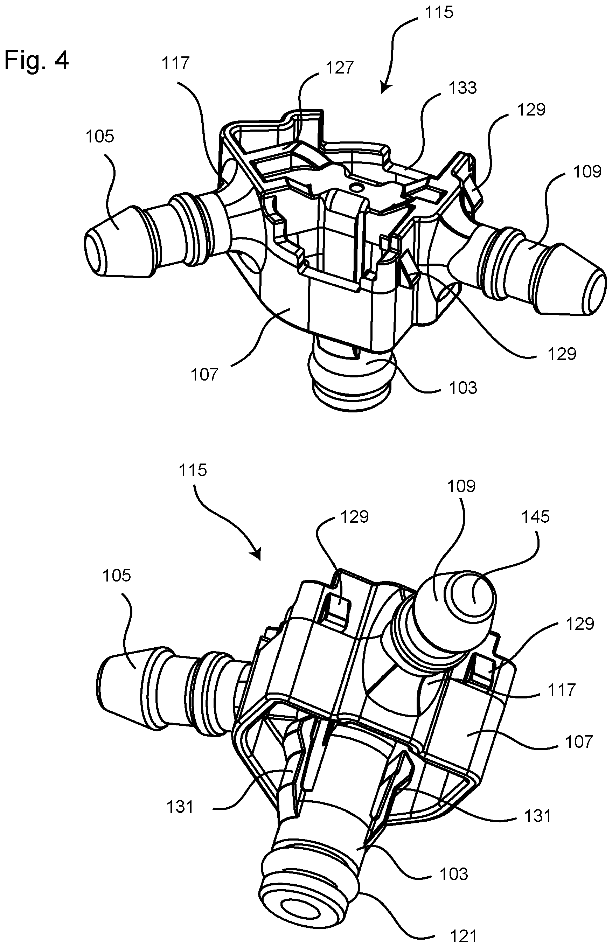

Fig. 4 zeigt eine perspektivische Ansicht des Basisteils 115 des Fluidsteckers 100. Die Stutzen 105 und 109 ragen ausgehend von dem zentralen Stutzen 103 durch den Verstärkungsrahmen 107 hindurch, so dass der innen liegende Fluidkanal 145 durch den Verstärkungsrahmen 107 geführt wird. An der Außenseite des Verstärkungsrahmens 107 sind keilförmige Rastnasen 129 gebildet, über die die Rastelemente 119 des Deckelelementes 113 beim Aufsetzen gleiten und in der Endposition einschnappen. Zwei der insgesamt drei Rastnasen 129 sind beidseitig des Stutzens 109 angeordnet. Die dritte Rastnase befindet sich an einer dem Stutzen 105 gegenüberliegenden Schrägwand. Der Bereich der Schrägwand des Verstärkungsrahmens 107, der die Rastnase umfasst, ist nach innen versetzt. In dieser nach Innen versetzten Position ist das aufgesetzte Rastelement 119 vor einer Beschädigung geschützt.

Der Stutzen 103 weist seitlich die Federarme 131 auf, die federnd an dem Stutzen 103 befestigt sind und beim Einsetzen des Fluidsteckers 100 in eine entsprechende Aussparung in der Einspritzdüse nachgeben. Befindet sich der Fluidstecker 100 in seiner vorgesehenen Endposition in der Einspritzdüse, wird das Klemmelement 111 heruntergedrückt, das den Zwischenraum zwischen den Federarmen 131 und dem Stutzen 103 ausfüllt und blockiert. Danach lassen sich die Federarme 131 nicht mehr in Richtung des Stutzens 103 bewegen und die Verbindung zwischen dem Fluidstecker 100 und der Einspritzdüse ist mechanisch verriegelt. Zum Entfernen des Fluidsteckers 100 aus der Einspritzdüse wird das Klemmelement 111 wieder nach oben geschoben, so dass der Zwischenraum freigegeben wird und die Federarme 131 sich bei Herausziehen des Fluidsteckers 100 in Richtung des Stutzens 103 bewegen können.

Auf der Innenseite des Verstärkungsrahmens 107 sind die Stutzen 105 und 109, mit zusätzlichen Verstärkungsrippen 127 verstärkt. Die Verstärkungsrippen 127 befinden sich an der Oberseite der Stutzen 105 und 109 und verlaufen Längsrichtung der Stutzen 105 und 109. Im Inneren der Stutzen 103, 105 und 109 verläuft der Fluidkanal 145 für den Kraftstoff.

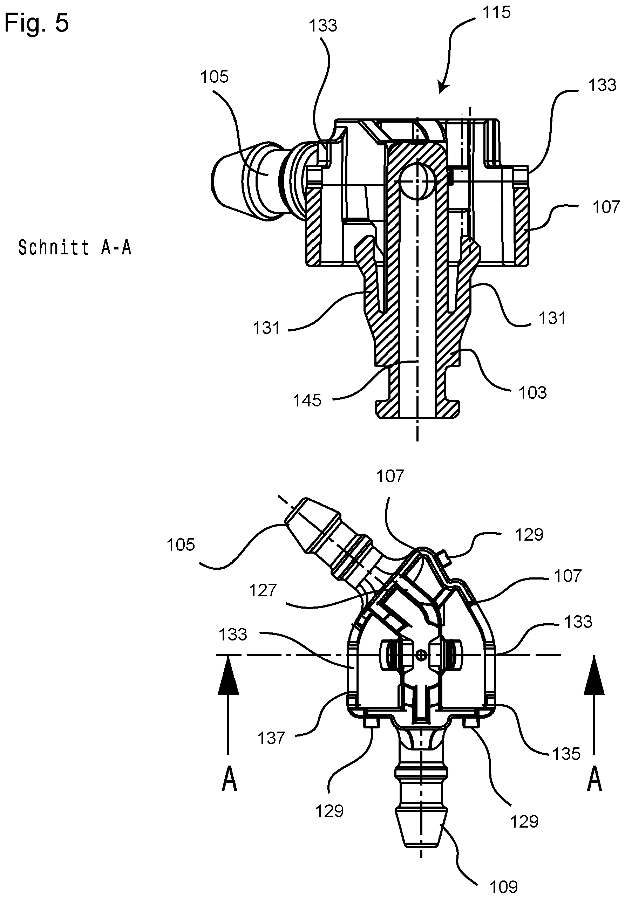

Fig. 5 zeigt eine Querschnittsansicht durch das Basisteil 115 entlang der Verbindungslinie A-A. Im Inneren des Basisteils 115 befindet sich der Fluidkanal 145 für den Kraftstoff. Die beiden Federarme 131 sind im unteren Abschnitt an dem Stutzen 103 befestigt. Im Oberen Abschnitt der Federarme 131 sind diese gegenüber dem Stutzen 103 beabstandet. Dieser Abstand wird durch das nach unten gedrückte Klemmelement 111 blockiert, so dass sich die Federarme 131 nicht mehr zusammendrücken lassen.

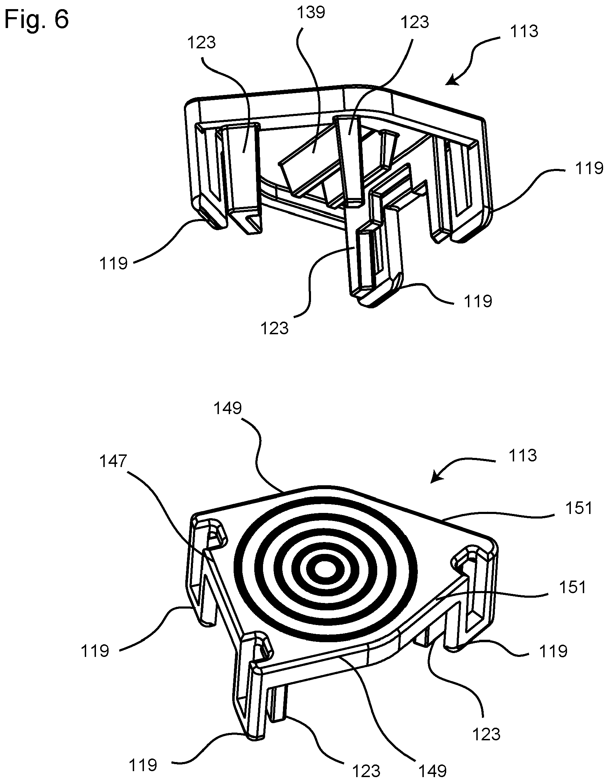

Fig. 6 zeigt eine perspektivische Ansicht des Deckelelements 113. Das Deckelelement 113 ist aus einer fünfeckigen Grundplatte mit einer Grundseite 147, zwei sich senkrecht erstreckenden und parallel zueinander verlaufenden Parallelseiten 149 und zwei spitz zulaufenden Winkelseiten 151 gebildet. Senkrecht ausgehend von dieser Grundplatte erstrecken sich sowohl die Rastelemente 119 und die Führungsabschnitte 123. Zwei der Rastelemente 119 befinden sich an der Grundseite 147 und eines der Rastelemente 119 ist an der Winkelseite 151 angeordnet. Die Führungsabschnitte 123 liegen den Rastelementen 119 gegenüber, so dass der eingesetzte Verstärkungsrahmen 107 zwischen dem Führungsabschnitt 123 und dem Rastelement 119 eingeklemmt ist. Dadurch kann eine ungewollte Demontage des Deckelementes 113 erschwert werden.

Die aus der Grundplatte in das Innere des Verstärkungsrahmens 107 hineinragenden Halterippen 139 dienen als weitere Führung für das Klemmelement 111 und halten das Klemmelement 111 seitlich in Position. Die Halterippen 139 weisen die Form von zwei parallel zueinander angeordneten Wänden auf. Zwischen diesen Halterippen 139 wird eine Querrippe 143 des Klemmelementes 111 geführt. Zusätzlich verstärken die Halterippen 139 das Deckelelement 113, so dass sich dieses bei einer Montage nicht durchbiegen kann.

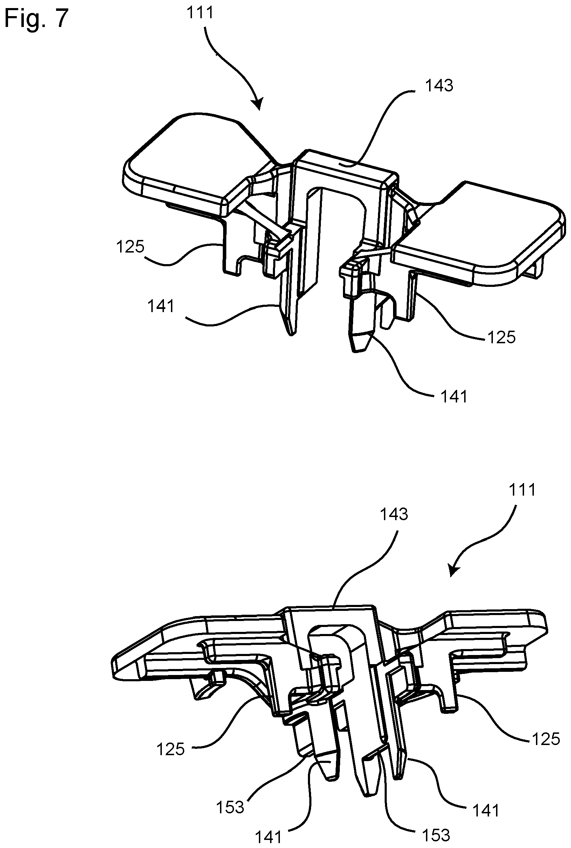

Fig. 7 zeigt eine perspektivische Ansicht des Klemmelementes 111. Das Klemmelement 111 umfasst eine Querrippe 143, die zwischen den Halterippen 139 des Deckelelementes 113 geführt wird. Im montierten Zustand liegt die Querrippe 143 zwischen den parallel angeordneten Halterippen 139 des Deckelelementes 113. Durch wird ein Spiel des beweglichen Klemmelementes 111 vermindert und ein automatisches Zentrieren des Klemmelementes 111 beim Zusammensetzen des Fluidsteckers 100 bewirkt.

Daneben umfasst das Klemmelement 111 die zwei seitlichen Führungskanten 125 zum Abstützen des Klemmelementes 111 gegenüber dem Verstärkungsrahmen 107. Zudem wird durch die Führungskanten 125 ein seitliches Zusammendrücken des Verstärkungsrahmens 107 bei eingesetztem Klemmelement 111 verhindert.

An der Unterseite umfasst das Klemmelement 111 Sicherungsdorne 141, die beim Verschieben des Klemmelementes 111 in Richtung der Einspritzdüse in den Zwischenraum zwischen dem Injektorloch und dem Stutzen 103 eindringen und eine mechanische Stabilisierung des Fluidsteckers 100 bewirken. Die Blockierflächen 153 dringen beim Verschieben des Klemmelementes 111 in den Zwischenraum zwischen den Federarmen 131 und dem Stutzen 103 ein und bewirken eine mechanische Verriegelung des Fluidsteckers 100.

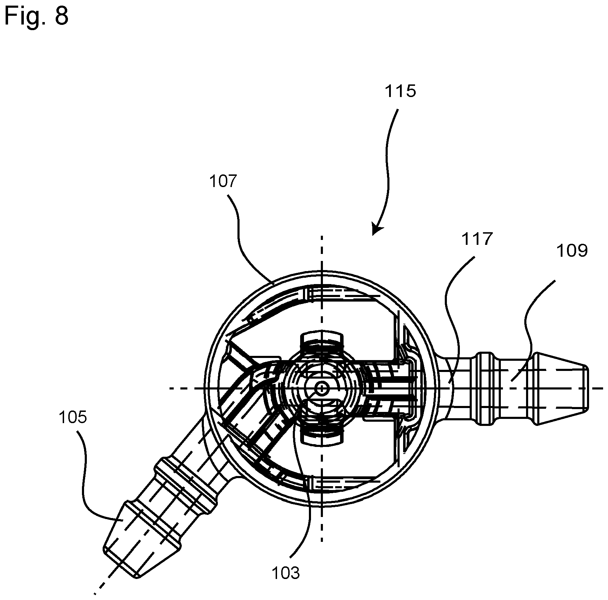

Fig. 8 zeigt eine Aufsicht auf eine weitere Ausführungsform eines Basisteils 115 für einen Fluidstecker 100. In dieser Ausführungsform ist der Verstärkungsrahmen 107 derart ausgebildet, dass dieser in zylindrischer Form konzentrisch um den Stutzen 103 umläuft. Die Stutzen 105 und 109 werden durch den Verstärkungsrahmen 107 gegeneinander stabilisiert, so dass sich eine Kraftübertragung auf die Verbindungsstelle der Stutzen 105 und 109 mit dem Stutzen 103 verringert. Der Verstärkungsrahmen 107 bildet Gerüst, das die herausragenden Stutzen gegeneinander stabilisiert. In dieser Ausführungsform wird ein kreisförmiges Deckelelement auf dem zylindrischen Basiselement 115 aufgerastet.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidstecker
- 103: Stutzen
- 105: Stutzen
- 107: Verstärkungsrahmen
- 109: Stutzen
- 111: Klemmelement
- 113: Deckelelement
- 115: Basiselement
- 117: Verstärkungsabschnitt
- 119: Rastelement
- 121: Dichtring
- 123: Führungsabschnitt
- 125: Führungskante
- 127: Verstärkungsstreben
- 129: Rastnasen
- 131: Federarm
- 133: Aussparung
- 135: Seitenwand
- 137: Seitenwand
- 139: Halterippe
- 141: Sicherungsdorne
- 143: Querrippe
- 145: Fluidkanal
- 147: Grundseite
- 149: Parallelseite
- 151: Winkelseite
- 153: Blockierfläche

## Patentansprüche

1. Fluidstecker (100) für ein Kraftstoffsystem, mit:
- einem ersten Stutzen (103) zum Aufstecken des Fluidsteckers (100) auf eine Einspritzdüse des Kraftstoffsystems;
- einem zweiten Stutzen (105) zum Anschließen einer Kraftstoffleitung;
- einen dritten Stutzen (109) zum Anschließen einer Kraftstoffleitung; und
- einem um den ersten Stutzen (103) umlaufenden Verstärkungsrahmen (107) zum Abstützen des zweiten Stutzens (105, 109) gegenüber dem ersten Stutzen (103), wobei der Verstärkungsrahmen (107) den dritten Stutzen (109) gegenüber dem ersten Stutzen (103) abstützt und wobei der Verstärkungsrahmen eine Innenseite und eine Außenseite aufweist,
**dadurch gekennzeichnet dass**
der Fluidstecker (100) ein Deckelelement (113) zum zumindest teilweisen Übergreifen eines Randes des Verstärkungsrahmens (107) umfasst,
dass
das Deckelelement (113) einen Führungsabschnitt (123) zum Führen des Deckelelementes (113) gegenüber der Innenseite des Verstärkungsrahmens (107) umfasst,
und dass
das Deckelelement (113) ein Rastelement (119) zum Einrasten auf der Außenseite des Verstärkungsrahmens (107) umfasst.

2. Fluidstecker (100) nach Anspruch 1, wobei der zweite Stutzen (105) den Verstärkungsrahmen (107) senkrecht durchdringt.

3. Fluidstecker (100) nach einem der vorangehenden Ansprüche, wobei der erste Stutzen (103) in einem rechten Winkel zum zweiten Stutzen (105) angeordnet ist.

4. Fluidstecker (100) nach einem der vorangehenden Ansprüche, wobei der Verstärkungsrahmen (107) im Querschnitt fünfeckig ist.

5. Fluidstecker (100) nach einem der vorangehenden Ansprüche, wobei der Verstärkungsrahmen (107) zwei parallele Seitenwände (135, 137) aufweist.

6. Fluidstecker (100) nach einem der vorangehenden Ansprüche, wobei der Verstärkungsrahmen (107) eine Ausnehmung (133) für ein seitlich herausragendes Klemmelement (111) umfasst.

7. Fluidstecker (100) nach einem der vorangehenden Ansprüche, wobei der Verstärkungsrahmen (107) einen Verstärkungsabschnitt (117) zum Verstärken einer Übergangsstelle zwischen dem Verstärkungsrahmen (107) und dem zweiten Stutzen (105) und/oder dem dritten Stutzen (109) umfasst.

8. Fluidstecker (100) nach Anspruch 1, wobei das Rastelement (119) des Deckelementes (113) gegenüberliegend zu dem Führungsabschnitt (123) des Deckelelementes (113) angeordnet ist.

9. Fluidstecker (100) nach einem der vorangehenden Ansprüche, wobei der Fluidstecker (100) ein Klemmelement (111) zum Sichern des Fluidsteckers (100) auf der Einspritzdüse umfasst, das eine Führungskante (125) zum Führen des Klemmelementes (111) an der Innenseite des Verstärkungsrahmens (107) umfasst.

## Claims

1. Fluid plug (100) for a fuel system, comprising:
- a first nozzle (103) for placing the fluid plug (100) on an injection nozzle of the fuel system;
- a second nozzle (105) for connecting a fuel line;
- a third nozzle (109) for connecting a fuel line; and
- a reinforcing frame (107) surrounding the first nozzle (103) for supporting the second nozzle (105, 109) with respect to the first nozzle (103), wherein the reinforcing frame (107) supports the third nozzle (109) with respect to the first nozzle (103) and wherein the reinforcing frame (107) comprises an inner side and an outer side,
**characterized in that**
the fluid plug (100) comprises a cover element (113) for at least partly overlapping an edge of the reinforcing frame (107),
that
the cover element (113) comprises a guide section (123) for guiding the cover element (113) against the inner side of the reinforcing frame (107),
and that
the cover element (113) comprises a locking element (119) for locking on the outer side of the reinforcing frame (107).

2. Fluid plug (100) according to claim 1, wherein the second nozzle (105) penetrates the reinforcing frame (107) perpendicularly.

3. Fluid plug (100) according to any one of the preceding claims, wherein the first nozzle (103) is arranged at a right angle to the second nozzle (105).

4. Fluid plug (100) according to any one of the preceding claims, wherein the reinforcing frame (107) is pentagonal in cross-section.

5. Fluid plug (100) according to any one of the preceding claims, wherein the reinforcing frame (107) comprises two parallel sidewalls (135, 137).

6. Fluid plug (100) according to any one of the preceding claims, wherein the reinforcing frame (107) comprises a recess (133) for a laterally-protruding clamping element (111).

7. Fluid plug (100) according to any one of the preceding claims, wherein the reinforcing frame (107) comprises a reinforcing section (117) for reinforcing a junction position between the reinforcing frame (107) and the second nozzle (105) and/or the third nozzle (109).

8. Fluid plug (100) according to claim 1, wherein the locking element (119) of the cover element (113) is arranged opposite to the guide section (123) of the cover element (113).

9. Fluid plug (100) according to any one of the preceding claims, wherein the fluid plug (100) comprises a clamping element (111) for securing the fluid plug (100) on the injection nozzle, the clamping element (111) comprising a guide edge (125) for guiding the clamping element (111) onto the inner side of the reinforcing frame (107).

## Revendications

1. Connecteur de fluide (100) pour un système de carburant, comportant:
- un premier raccord (103) pour enficher le connecteur de fluide (100) dans une buse d'injection du système de carburant;
- un deuxième raccord (105) pour connecter un conduit de carburant;
- un troisième raccord (109) pour connecter un conduit de carburant; et
- un châssis de renforcement (107) s'enroulant autour du premier raccord (103) pour supporter le deuxième raccord (105, 109) contre le premier raccord (103), dans lequel le châssis de renforcement (107) supporte le troisième raccord (109) contre le premier raccord (103) et dans lequel le châssis de renforcement présente un côté intérieur et un côté extérieur,
**caractérisé en ce que**:
le connecteur de fluide (100) comporte un élément de couverture (113) pour englober au moins partiellement une bordure du châssis de renforcement (107),
et que
l'élément de couverture (113) comporte une section de guidage (123) pour guider l'élément de couverture (113) contre le côté intérieur du châssis de renforcement (107),
et que
l'élément de couverture (113) comporte un élément d'encliquetage (119) pour l'encliquetage sur le côté extérieur du châssis de renforcement (107).

2. Connecteur de fluide (100) selon la revendication 1, dans lequel le deuxième raccord (105) perce le châssis de renforcement (107) perpendiculairement.

3. Connecteur de fluide (100) selon l'une des revendications précédentes, dans lequel le premier raccord (103) est disposé à angle droit par rapport au deuxième raccord (105).

4. Connecteur de fluide (100) selon l'une des revendications précédentes, dans lequel le châssis de renforcement (107) est pentagonal en section transversale.

5. Connecteur de fluide (100) selon l'une des revendications précédentes, dans lequel le châssis de renforcement (107) présente deux parois latérales parallèles (135, 137).

6. Connecteur de fluide (100) selon l'une des revendications précédentes, dans lequel le châssis de renforcement (107) comporte une cavité (133) pour un élément de serrage (111) qui fait saillie latéralement.

7. Connecteur de fluide (100) selon l'une des revendications précédentes, dans lequel le châssis de renforcement (107) comporte une section de renforcement (117) pour renforcer une zone de transition entre le châssis de renforcement (107) et le deuxième raccord (105) et/ou le troisième raccord (109).

8. Connecteur de fluide (100) selon la revendication 1, dans lequel l'élément d'encliquetage (119) de l'élément de couverture (113) est disposé en face à la section de guidage (123) de l'élément de couverture (113).

9. Connecteur de fluide (100) selon l'une des revendications précédentes, dans lequel le connecteur de fluide (100) comporte un élément de serrage (111) pourfixer le connecteur de fluide (100) sur la buse d'injection, l'élément de serrage (111) comportant un bord de guidage (125) pour guider l'élément de serrage (111) dans le côté intérieur du châssis de renforcement (107).
